# EUROPÄISCHE PATENTSCHRIFT

(11) **EP 2 072 857 B1**
(45) Veröffentlichungstag und Bekanntmachung des Hinweises auf die Patenterteilung: **23.10.2013**
(21) Anmeldenummer: 08167902.9
(22) Anmeldetag: 30.10.2008
(51) Int. Cl.: F16G 1/28

(54) **Zahnriemen**
Tooth belt
Courroie dentée

(30) Priorität: 21.12.2007 DE 102007062285
(43) Veröffentlichungstag der Anmeldung: 24.06.2009
(73) Patentinhaber: ContiTech Antriebssysteme GmbH, 30165 Hannover (DE)
(72) Erfinder: Kanzow, Dr. Henning, 30519 Hannover (DE); Unruh, Axel, 30655 Hannover (DE); Mahnken, Klaus-Lüder, 27367 Ahausen (DE); Schulte, Hermann, 30823 Garbsen (DE)
(74) Vertreter: Finger, Karsten

(56) Entgegenhaltungen:
- EP-A1- 0 466 476
- EP-A1- 0 592 951
- WO-A2-99/64328
- JP-A- 56 080 544
- JP-A- 61 088 039
- JP-U- H0 210 482

## Beschreibung

Die Erfindung betrifft einen Zahnriemen aus elastomerem Material mit eingebetteten Festigkeitsträgern und mindestens einer zahnseitigen textilen Gewebeauflage mit texturierten Schussfäden und Kettfäden, bei dem die Schussfäden im Wesentlichen parallel zur Laufrichtung des Zahnriemens angeordnet sind.

Derartige Zahnriemen sind an sich bekannt und seit längerer Zeit im Einsatz, zum Beispiel EP 04566476, JP 56080544 und JP 61088039. Die Gewebeauflage dient dabei meist der Verschleißminderung, aber auch der Beeinflussung des Geräuschverhaltens der Riemen.

Die DE 699 08 241 T2 offenbart einen Zahnriemen mit einer Gewebeauflage, bei der zur Verbesserung des Verschleißverhaltens das Gewebe aus Kettfäden und Schussfäden aufgebaut ist und der Schuss aus einem elastischen Faden besteht, der von wenigstens zwei Verbundfäden umsponnen ist. Die Verbundfäden sind wiederum aus einem ersten Faden mit hoher Wärmebeständigkeit und hoher Festigkeit und einem Deckfaden aufgebaut, wobei der Deckfaden auf den ersten Faden aufgewickelt ist. Der Deckfaden besteht dabei aus texturiertem Polymermaterial, bevorzugt aus PA, Nylon 66. Das Kettmaterial ist dabei vorzugsweise aus Polyamid ausgebildet.

Ein derart ausgebildeter Schussfaden ist jedoch aufwendig herzustellen und erhöht die Dicke des Gewebes. Dickere Gewebe werden aber im Betrieb leicht platt gedrückt, so dass der Dämpfungseffekt abnimmt. Außerdem sind derart dicke Gewebe besonders bei geringen Zahnhöhen nicht immer einsetzbar.

Der Erfindung liegt die Aufgabe zugrunde, einen Zahnriemen der eingangs beschriebenen Art zu schaffen, der unter Vermeidung der genannten Probleme eine hohe und dauerhafte Dämpfung der Schallemissionen gewährleistet.

Diese Aufgabe wird dadurch gelöst, dass die Gewebeauflage ein Verhältnis Q aus der Masse der texturierten Schussfäden zu der Masse der Kettfäden aufweist, das zwischen Q = 3 und Q = 5,17 liegt..

Durch ein derartiges Schuss-Kettfaden-Massenverhältnis hat sich in Versuchen eine deutliche Absenkung der Schallemissionen gezeigt. Die weitere Erhöhung des Schussgarnanteils hat in Versuchen eine Verbesserung des Schallemissionsverhaltens bewirkt. Bei einem derartig hohen Schussgarnanteil im Verhältnis von Q=5,17 gegenüber dem Kettgarnanteil in der Gewebeauflage hat sich in den Versuchen ein relatives Maximum an Schalldämpfung herausgestellt.

In einer Weiterbildung der Erfindung weist die Gewebeauflage einen Anteil zwischen 3 und 30 Gewichts-% einer Beschichtung mit Resorzin - Formaldehyd - Latex (RFL) auf Basis eines Hydrierten Nitril - Kautschuks (HNBR) auf.

Eine Haftvermittlerbeschichtung mit RFL auf Basis von HBNR weist im genannten Bereich gegenüber einer vergleichbaren Haftvermittlerschicht auf Basis anderer Elastomere, beispielsweise Chlorsulfonierten Polyethylen (CSM) einer verbesserte Schalldämpfung auf. Die thermische Stabilität des Verbundes von Gewebeauflage und Zahnriemen ist mit einer HNBR-Basis ebenfalls besser als beispielsweise mit CSM-Basis.

In einer bevorzugten Ausführungsform der Erfindung weist die Gewebeauflage einen Anteil von 5 bis 10 Gewichts-% einer Beschichtung mit Resorzin - Formaldehyd - Latex (RFL) auf Basis eines Hydrierten Nitril - Kautschuks (HNBR) auf.

Die Reduktion der Schallemissionen ist in diesem Bereich weiter optimiert.

In einer Weiterbildung der Erfindung ist die Gewebeauflage derart ausgebildet, dass mindestens 60% des Längenanteils aller Schussfäden die Kettfäden überdeckt und zur zahnseitigen Außenseite des Riemens weist.

In einer Weiterbildung der Erfindung ist die Gewebeauflage derart ausgebildet, dass mindestens 70% des Längenanteils aller Schussfäden die Kettfäden überdeckt und zur zahnseitigen Außenseite des Riemens weist.

Die Anordnung eines hohen Schussfadenanteils auf der Außenseite des Gewebes lässt sich durch die Art der Bindung des Gewebes, beispielsweise durch eine Köperbindung realisieren. Der übrige, kleinere Längenanteil der Schussfäden liegt dabei auf der dem Riemen zugewandten Seite der Kettfäden und ist mit dem Elastomermaterial des Zahnriemens verbunden.

Ein erfindungsgemäßer Zahnriemen mit einem außergewöhnlich hohen Schussgarnanteil zeigt also bei gleichem Flächengewicht und gleicher Dicke ein gegenüber dem Stand der Technik deutlich verbessertes Schallemissionsverhalten, wobei dieser Effekt durch die nach Außen weisende Anordnung eines hohen Schussfadenanteils noch verstärkt ist.

In einer Weiterbildung der Erfindung weist die zahnseitige Gewebeauflage eine Antigeräuschbeschichtung aus einem elastomeren Material mit eingebettetem Polytetrafluorethylen (PTFE) auf.

Eine derartige Beschichtung setzt den Reibbeiwert der Gewebeauflage herab, wodurch auch die Schallemission verringerbar ist.

Anhand der Zeichnung wird nachstehend ein Beispiel der Erfindung näher erläutert. Es zeigt:
- Fig. 1: einen erfindungsgemäßen Zahnriemen mit einer Gewebeauflage,
- Fig. 2: eine prinzipielle Darstellung der erfindungsgemäßen Gewebeauflage.

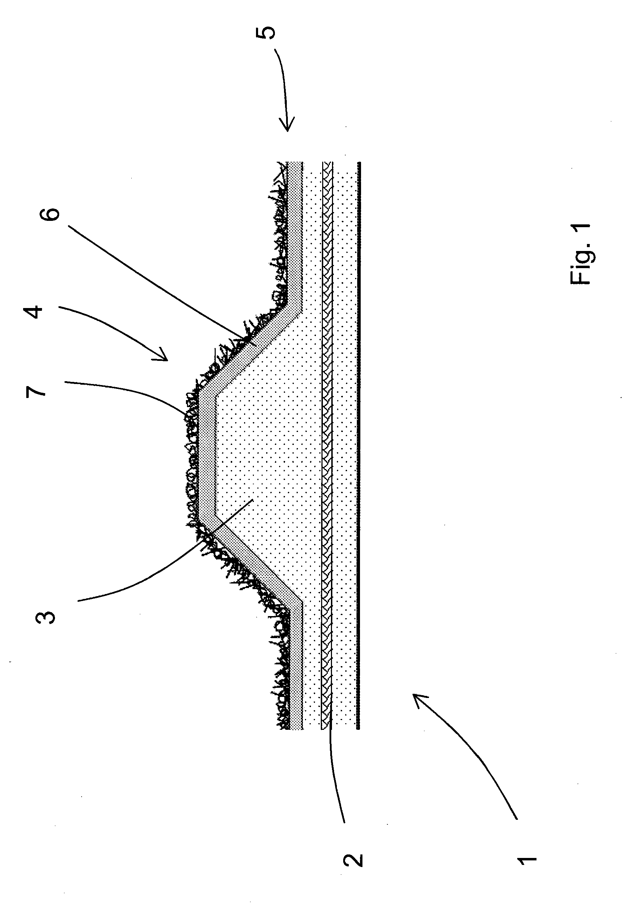

Die Fig. 1 zeigt einen Zahnriemen 1 mit einer Zug- oder Festigkeitsträgerlage 2, welche in eine Elastomermatrix 3 eingebettet ist. Auf der gezahnten Seite 4 des Zahnriemens 3 ist eine Beschichtung 5 aufgebracht, die aus einer elastomeren Grundauflage 6 und einer Gewebeauflage 7 aufgebaut ist.

Der Zahnriemen 1 ist in hier nicht gezeigter Weise zu einem endlosen Ring verbunden. Die Elastomermatrix 3 und die Grundauflage 6 sind aus einem HNBR aufgebaut. Die Festigkeitsträgerlage 2 ist aus Glascord aufgebaut. Die Gewebeauflage 7 weist Kett- und Schussfäden aus PA 6.6 auf, wobei die texturierten Schussfäden gekräuselt sind.

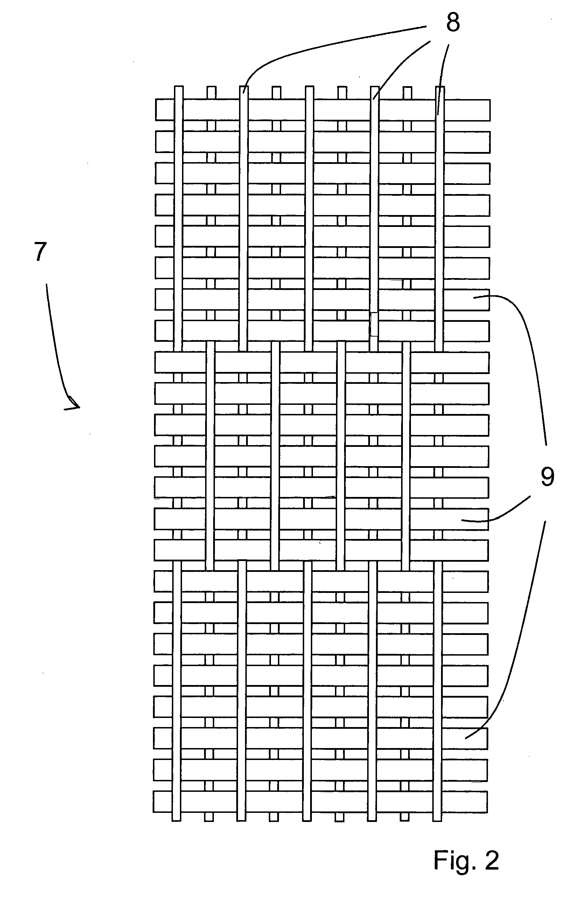

In der Fig. 2 ist eine erfindungsgemäße Gewebeauflage 7 im Prinzip dargestellt. Die Gewebeauflage 7 weist Kettfäden 8 und Schussfäden 9 auf.

Kettfäden 8 und Schussfäden 9 sind mit einer hier nicht dargestellten Haftvermittlerbeschichtung aus RFL auf HBNR-Basis beschichtet. Diese Beschichtung dient der Haftvermittlung zwischen den Fäden 8 und 9 und dem hier nicht gezeigten Elastomermaterial des Zahnriemens.

Die Gesamtmasse der Schussfäden 9 ist um den Faktor Q = 5 größer als die Gesamtmasse der Kettfäden 8.

Die Schussfäden 9 sind aus texturiertem PA 6.6-Garn. Die Texturierung führt bei der Verarbeitung zu einem Kräuseleffekt, der bei der Gewebeauflage eine flauschartige Oberfläche bewirkt. Dieser Effekt ist hier jedoch nicht gezeigt.

In der Tabelle 1 sind verschiedene Ausführungsformen von Zahnriemen im Hinblick auf die Schallemissionen zusammengestellt.

**Tabelle 1**

| Gewebe-auflage | Kettgam-Längengew. | Schussgam-Längengew. | ketttaden-dichte | Schussfaden-dichte | Schussl Kette-Verhältnis Q | Flächengew. d. Gewebeauflage | Dicke d. Gewebeauflage |
|---|---|---|---|---|---|---|---|
| | [dtex] | [dtex] | [dm-1] | [dm-1] | | [g/m²] | [mm] |
| F1 | 235 | 470 | 300 | 300 | 2,00 | 390 | 1.2 |
| F2 | 235 | 470 | 300 | 385 | 2,57 | 500 | 1,4 |
| F3 | 110 | 470 | 380 | 460 | 5,17 | 490 | 1,4 |

Ansonsten gleiche Zahnriemen mit 120 Zähnen, 30mm Breite, einem Zugträger aus Glascord und einer elastomeren Matrix aus HNBR weisen zahnseitig verschieden ausgeführte Gewebeauflagen F1, F2 und F3 auf. Die verschiedenen Gewebeauflagen F1, F2 und F3 sind in Tabelle 2 aufgelistet.

**Tabelle 2**

| Zahnriemen mit Gewebe | Geräuschpegelditterenz im Vergle ch zu F2 bei 900 min-1 | Geräuschpegeldifferenz im Vergleich zu F2 bei 1200 min-1 | Geräuschpegeldifferenz im Vergleich zu F2 bei 2000 min-1 | Geräuschpegeldifferenz - summe im Vergleich zu F2 |
|---|---|---|---|---|
| | [dB(A)] | [dB(A)] | [dB(A)] | [dB(A)] |
| F1 | 0,2 | 0.3 | -0.2 | 0,3 |
| F2 | 0 | 0 | 0 | 0 |
| F3 | -0,2 | -0,5 | -0,9 | -1,6 |

Die geräuschliche Beurteilung der Riemen erfolgte auf einem Vierzylinder-Dieselmotor bei den Drehzahlen 900, 1200 und 2000 pro Minute.

In einem Meter Entfernung vom Riementrieb des Motors ohne Abdeckung wird mit einem Geräuschmesskopf HMS III.0 der Firma Head-Akustik der Geräuschpegel bei einer Motorbetriebstemperatur von 80°C bestimmt. In der Tabelle sind die Differenzen der Geräuschpegel im Vergleich zu den Riemen mit dem Gewebe F2 aufgeführt. Zur besseren Vergleichbarkeit wird ebenfalls die Summe der Geräuschpegeldifferenzen gebildet. Der Vergleich der Riemen mit Beschichtung F1 und F2 ergibt, dass das schwerere und dickere Gewebe F2 etwas leiser ist. Zahnriemen mit dem in Gewicht und Dicke mit F2 vergleichbaren Gewebe F3 sind hingegen deutlich leiser als die Riemen mit dem Gewebe F2. Der deutlich höhere Schussgarnanteil mit Q = 5,17 bei F3 reduziert die Geräuschentwicklung in allen drei untersuchten Drehzahlbereichen.

### Bezugszeichenliste (Teil der Beschreibung)

- 1: Zahnriemen
- 2: Festigkeitsträgerlage
- 3: Elastomermatrix
- 4: Zahnseite des Zahnriemens 1
- 5: zahnseitige Beschichtung
- 6: elastomere Grundauflage der Beschichtung 5
- 7: Gewebeauflage
- 8: Kettfäden der Gewebeauflage 7
- 9: Schussfäden der Gewebeauflage 5

## Patentansprüche

1. Zahnriemen (1) aus elastomerem Material (3) mit eingebetteten Festigkeitsträgern (2) und mindestens einer zahnseitigen textilen Gewebeauflage (7) mit texturierten Schussfäden (9) und Kettfäden (8), bei dem die Schussfäden (9) im Wesentlichen parallel zur Laufrichtung des Zahnriemens (1) angeordnet sind,
**dadurch gekennzeichnet, dass**
die Gewebeauflage (7) ein Verhältnis Q aus der Masse der texturierten Schussfäden (9) zu der Masse der Kettfäden (8) aufweist, das zwischen Q = 3 und Q = 5,17 liegt.

2. Zahnriemen (1) nach Anspruch 1,2 oder 3, **dadurch gekennzeichnet, dass** Kett- und Schussfäden (8, 9) einen Anteil einer Beschichtung mit Resorzin - Formaldehyd - Latex (RFL) auf Basis eines Hydrierten Nitril - Kautschuks (HNBR) zwischen 3 und 30 Gewichts - % aufweisen.

3. Zahnriemen (1) nach Anspruch 4, **dadurch gekennzeichnet, dass** Kett- und Schussfäden (8, 9) einen Anteil einer Beschichtung mit Resorzin - Formaldehyd - Latex (RFL) auf Basis eines Hydrierten Nitril - Kautschuks (HNBR) zwischen 5 und 10 Gewichts - % aufweisen.

4. Zahnriemen (1) nach mindestens einem der vorhergehenden Ansprüche, **dadurch gekennzeichnet, dass** die Gewebeauflage (7) derart ausgebildet ist, dass mindestens 60% des Längenanteils aller Schussfäden (9) die Kettfäden (8) überdeckt und zur zahnseitigen Außenseite (4) des Riemens (1) weist.

5. Zahnriemen (1) nach Anspruch 6, **dadurch gekennzeichnet, dass** die Gewebeauflage (7) derart ausgebildet ist, dass mindestens 70% des Längenanteils aller Schussfäden (9) die Kettfäden (8) überdeckt und zur zahnseitigen Außenseite (4) des Riemens (1) weist.

6. Zahnriemen (1) nach mindestens einem der vorhergehenden Ansprüche, **dadurch gekennzeichnet, dass** die zahnseitige Gewebeauflage (7) eine Antigeräuschbeschichtung aus einem elastomeren Material mit eingebettetem Polytetrafluorethylen (PTFE) aufweist.

## Claims

1. Toothed belt (1) of elastomeric material (3) with embedded reinforcing elements (2) and at least one tooth-side textile fabric support (7) with textured weft threads (9) and warp threads (8), in which the weft threads (9) are arranged substantially parallel to the running direction of the toothed belt (1), **characterized in that** the fabric support (7) has a ratio Q of the mass of textured weft threads (9) to the mass of warp threads (8) that lies between Q = 3 and Q = 5.17.

2. Toothed belt (1) according to Claim 1, 2 or 3, **characterized in that** the weft and warp threads (8, 9) comprise a fraction of a coating with resorcinol formaldehyde latex (RFL) based on a hydrogenated nitrile butadiene rubber (HNBR) of between 3 and 30% by weight.

3. Toothed belt (1) according to Claim 4, **characterized in that** the weft and warp threads (8, 9) comprise a fraction of a coating with resorcinol formaldehyde latex (RFL) based on a hydrogenated nitrile butadiene rubber (HNBR) of between 5 and 10% by weight.

4. Toothed belt (1) according to at least one of the preceding claims, **characterized in that** the fabric support (7) is formed in such a way that at least 60% of the linear fraction of all the weft threads (9) cover the warp threads (8) and face the tooth-side outer side (4) of the belt (1).

5. Toothed belt (1) according to Claim 6, **characterized in that** the fabric support (7) is formed in such a way that at least 70% of the linear fraction of all the weft threads (9) cover the warp threads (8) and face the tooth-side outer side (4) of the belt (1).

6. Toothed belt (1) according to at least one of the preceding claims, **characterized in that** the tooth-side fabric support (7) comprises an antinoise coating of an elastomeric material with embedded polytetrafluoroethylene (PTFE).

## Revendications

1. Courroie crantée (1) en matériau élastomère (3) dans lequel sont incorporés des renforts (2) et présentant sur le côté cranté au moins une garniture (7) en textile tissé dotée de fils de trame texturés (9) et de fils de chaîne (8), les fils de trame (9) étant disposés essentiellement en parallèle à la direction de déplacement de la courroie crantée (1),
**caractérisée en ce que**
la garniture (7) en tissu présente un rapport Q entre la masse des fils de trame (9) texturés et la masse de fils de chaîne (8) compris entre Q = 3 et Q = 5,17.

2. Courroie crantée (1) selon la revendication 1, 2 ou 3, **caractérisée en ce que** les fils de chaîne et les fils de trame (8, 9) présentent une teneur en revêtement de résorcine-formaldéhyde-latex (RFL) à base d'un caoutchouc hydrogéné au nitrile (HNBR) comprise entre 3 et 30 % en poids.

3. Courroie crantée (1) selon la revendication 4, **caractérisée en ce que** les fils de chaîne et les fils de trame (8, 9) présentent une teneur en revêtement de résorcine-formaldéhyde-latex (RFL) à base d'un caoutchouc hydrogéné au nitrile (HNBR) comprise entre 5 et 10 % en poids.

4. Courroie crantée (1) selon au moins l'une des revendications précédentes, **caractérisée en ce que** la garniture tissée (7) est configurée de telle sorte qu'au moins 60 % de la longueur de tous les fils de trame (9) recouvre les fils de chaîne (8) et est orientée vers le côté extérieur (4) cranté de la courroie (1).

5. Courroie crantée (1) selon la revendication 6, **caractérisée en ce que** la garniture tissée (7) est configurée de telle sorte qu'a moins 70 % de la longueur de tous les fils de trame (9) recouvre les fils de chaîne (8) et est orientée vers le côté extérieur (4) cranté de la courroie (1).

6. Courroie crantée (1) selon au moins l'une des revendications précédentes, **caractérisée en ce que** la garniture tissée (7) située du côté cranté présente un revêtement antibruit en matériau élastomère dans lequel est incorporé du polytétrafluoroéthylène (PTFE).
